Europäisches Patentamt

European Patent Office

Office européen des brevets

(11) Publication number: **0 162 159**
**A1**

## EUROPEAN PATENT APPLICATION

(21) Application number: **84303445.5**

(22) Date of filing: **21.05.84**

(51) Int. Cl.⁴: **F 16 K 3/02**
**B 65 D 90/58**

(43) Date of publication of application:
**27.11.85 Bulletin 85/48**

(84) Designated Contracting States:
**AT BE CH DE FR GB IT LI LU NL SE**

(71) Applicant: **Chan, John Chor Han**
**9006 Grape Street**
**Houston Texas 77036(US)**

(72) Inventor: **Chan, John Chor Han**
**9006 Grape Street**
**Houston Texas 77036(US)**

(74) Representative: **Wynne-Jones, John Vaughan et al,**
**Wynne-Jones, Lainé & James 22, Rodney Road**
**Cheltenham Gloucestershire GL50 1JJ(GB)**

(54) **High temperature fluid control valve.**

(57) Methods, means and apparatus for controlling the flow of fluids at temperatures up to and above 1400°F so as to maintain both throttling and shut-off capability of a flowstream of very hot, very corrosive and very erosive fluids. An upstream orifice (14) is occluded by a gate (12), neither touching the other during service but maintained in close proximity for controlling the flow. The position and line of travel of the gate relative to the orifice is adjustable so as to offset fabrication tolerances and service strains.

FIG. 1

EP 0 162 159 A1

- 1 -

"High Temperature Fluid Control Valves"

This invention relates generally to methods and means for controlling the flow of high temperature fluids which may be gases, liquids or granular, through large pipes and vessels. It is well known that fluid flow streams at temperatures of the order of 400° to 1200°C tend to cause severe corrosion and erosion of the internal fluids contact surfaces that confine the fluid. So as to lessen such corrosion and erosion many materials such as ceramics, refractory, and high alloy metals have been used as linings of the pipe and vessel walls, thus allowing pressure containing members to operate without damage due to corrosion or erosion.

In such an environment, surfaces that must move relative to one another and then must fit precisely together and abut one another in sealing contact, are particularly vulnerable to failure due to corrosion and erosion by particles in the flow stream and are also vulnerable to failure caused by wear between the sealing surfaces during sliding contact, as occurs when conventional gate valves are used, the gate and seat being forced together by a differential pressure across the gate and then to slide one against the other, often with abrasive particles trapped between. Because large valves often flex during shipment, installation , pressurizing and/or heating, precise adjustment  at the factory may be negated, and thereby cause need for adjustment after installation and indeed during or after initial use so as to maintain functional integrity.  A variety of different valve seat designs have been proposed for controlling fluid flow through large valves.  In one proposal a wedge type gate is forced between co-operating seating surfaces so as to control flow through the valve.  It can be readily understood that differential pressure across the gate will force the gate against the downstream seat during movement of the gate into sealing position, and that such movement causes wear between the sealing surfaces, particularly when abrasive particles are trapped between the surfaces, the wear increasing with the temperature and pressure.

In another proposal the upstream seat is forced by fluid pressure against the gate which, in turn, is forced against the downstream seat so as to form seals on both sides of the gate.  However, no relief is had from the full force of pressure causing wear between the sealing surfaces.

In high temperature installations such as in coal gasification facilities where large valves are needed to perform realiably to control flow streams containing abrasive particles as well as corrosive fluids, field adjustment of the valves is highly desirable so as to offset distortions of the valve structure and thereby allow proper positioning of the flow control members for reliable performance.

Broadly stated from one aspect the invention consists in a method for controlling the flow of a high temperature stream of fluid comprising: selectively positioning a gate member so as to restrict flow through an orifice; maintaining a face of the gate member in a plane substantially parallel to the plane of a co-operating face of the orifice; and maintaining the distance between said planes within a predetermined range so as to cause desired flow control between said faces.

The invention also resides in means for controlling the flow of a high temperature stream of fluid comprising means for selectively positioning a gate member so as to restrict flow through an orifice; means for maintaining a face of the gate member in a plane substantially parallel to the plane of a co-operating face of the orifice; and means for maintaining the distance between said planes within a predetermined range so as to cause desired flow control between said faces.

From another aspect the invention consists in means for adjusting a flow control gate member for sliding movement with respect to a co-operating orifice, comprising means positioning the gate member such that a face of the gate member is in contact with a co-operating face of the orifice and transversely a predetermined distance past an extreme operating position of the gate member; and means for adjusting the gate member guide means so as to allow for precise sliding movement of the gate with respect to the orifice, along a line of travel; the line of travel forming an angle of less than five degrees with respect to said faces.

In a preferred embodiment of the invention a gate member is selectively positioned so as to restrict flow through an orifice, the gate member having a face substantially parallel to a face around the orifice, the parallel faces maintained in spaced relationship. The gate is provided with guide means so as to allow for controlled movement of the gate along a line of travel substantially transverse to the bore of the orifice but at a small angle with respect to the parallel faces such that as the gate is opened, the distance between the faces increases slightly. The faces are not allowed to contact one another while in service and are not allowed to be spaced so far apart that undesirable leakage occurs between the faces.

To adjust the range of spaced relationship between the parallel surfaces, the gate is allowed to travel as guided by the guide means until the parallel surfaces touch together or touch a flat sheet placed between them so as to establish a known relative spacing between the parallel surfaces. The gate is then positioned in its closed position and stop means are set to prevent travel past said closed position.

Guide means for the gate may be both axial and angular adjusted so as to offset manufacturing tolerances as well as subsequent distortions of the valve structure so as to maintain the gate face parallel to and within a desired distance of the orifice face throughout the full range of gate travel while in service. Corrosion, erosion and temperature resistant surfaces are provided for both the gate and orifice faces as well as for the co-operating surfaces of the gate guide means.

The invention may be performed in various ways and one particular embodiment will now be described by way of example with reference to the accompanying drawings, in which:-

Figure 1 is a partial sectional view taken along the centreline of the gate and the conduit of a valve constructed in accord with the present invention,

Figure 2 is a fragmentary section taken along line 2-2 of Figure 1 to show attachement and adjusting means for the gate guide means,

Figure 3 is a view similar to Figure 1 but with the gate and orifice removed to better show attachment and adjusting means for the gate guide means, and

Figure 4 is an isometric view of the gate and orifice in closed relationship to one another.

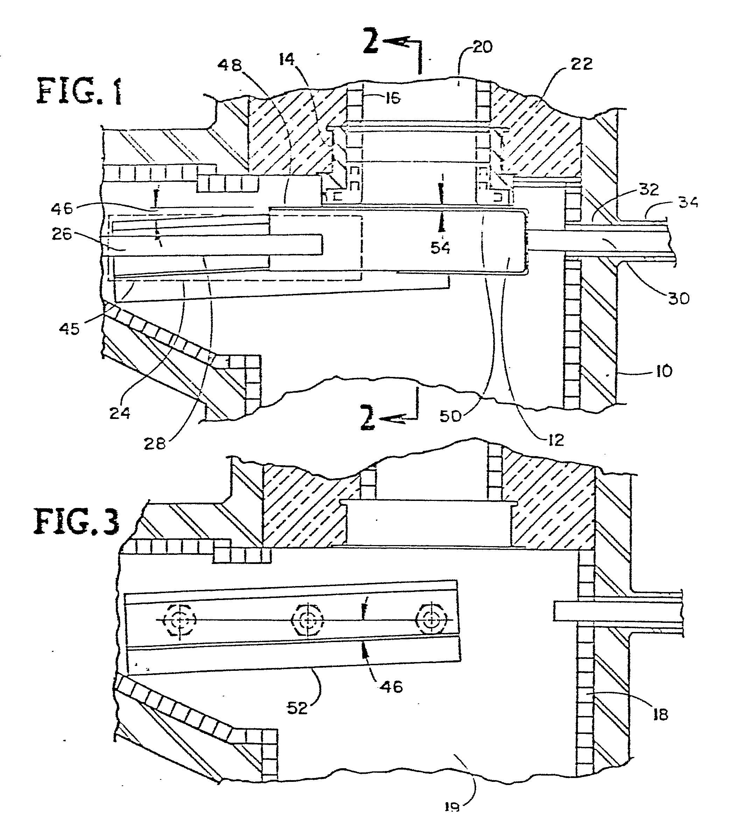

Referring to Figure 1, a valve body 10, fabricated from steel or other suitable metal, provides structural support for the entire assembly and also serves to contain the fluid pressure against leakage. A gate 12 is positioned to close the orifice, shown generally at 14. Firebricks 16 line the conduit so as to withstand the full effect of the high temperature fluid which may be in the 800-2200$^{\circ}$F range. Firebricks may be used to line other portions of the steel body as at 18 to protect it from momentary effects of the hot fluid when the gate is opened to allow discharge of the hot fluid contained in the upstream conduit 20. It should be understood that the hot fluid may be highly corrosive and erosive also. The hot flow stream after passing the open gate 12 may then continue through downstream conduit 19. So as to protect the body 10 against heat damage, such as weakening and corrosion caused by extended presence of hot fluid within conduit 20, insulation material 22 may be provided so as to reduce the flow of heat to the body such that ambient cooling may reduce the body temperature to the $300^{\circ}$C range or lower.

The gate 12 may be reversibly moved toward full open position as shown at dotted line 24 or selectively positioned at any intermediate position, by means of a stem 26 suitably attached to gate 12 as at 28, stem 26 being actuated by a conventional valve operator. A suitable gate stop means as at 30 may be provided so as to prevent gate 12 travelling beyond the closed position, or extreme operating position of the gate. Stop means 30 may extend through opening 32 formed through the wall of the valve and a tubular member 34 so as to provide for adjustment of stop means 30 in a cooler area by any suitable means well-known in the art. It should also be understood that stop means may be provided for stem 26 to achieve the same effect as stop means 30.

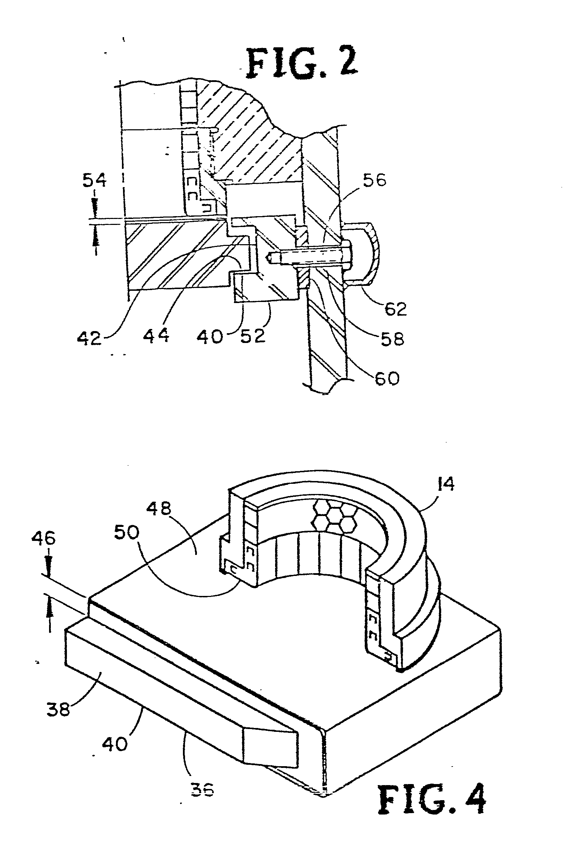

Now referring to Figures 2 and 4, lugs 36 are formed along opposite sides of gate 12 and parallel to the axis of stem 26 so as to provide outer guide surfaces as at 38 and lower guide surfaces as at 40 to co-operate with guide surfaces as at 42 and 44 respectively and thereby guide the movement of gate 12 precisely along a desired path 45 substantially transverse to the axis of conduit 20, deviating by angle 46 such that face 48 of gate 12 remains parallel to face 50 of orifice 14 throughout the travel along path 45.

Guide surfaces 42 and 44 may be formed in a bar 52 which may be adjusted angularly so as to make angle 46 precise with respect to face 50 and axially with respect to conduit 20 so as to adjust clearance 54 between faces 48 and 50 as desired. The bar 52 may be attached to body 10 by bolts 56 projecting through openings 58 formed through body wall 10 and a spacer 60 such that openings 58 are sufficiently greater in diameter than are bolts 56 to allow for adjustment of the bar 52 as desired. Caps 62 may be positioned around bolts 56 and against body 10 for welding to body 10 so as to prevent leakage of fluid through openings 58. It should be understood that a like assembly of bar 52 is positioned to guide lug 36 formed on the opposite side of gate 12 such that gate 12 will be guided precisely along path 45. The gate 12 is supported by surfaces 40 of lugs 36 bearing upon surfaces 44 of the bar 52 against gravity and against differential pressures that may be produced across gate 12 to thereby maintain gate 12 on its path 45 against downward movement. It should be understood that as gate 12 moves along the path 45 from the closed position as shown by solid lines of Figure 1 toward full open position 24, clearance 54 will increase, as controlled by angle 46. In the closed position, clearance 54 is set to produce an acceptable degree of sealing for the service intended, including fluid chracteristics, expected pressure differential across gate 12 and size of particles that may be in the flow stream.

It may now be understood that no gravity or pressure loads are transmitted from face 48 to face 50, which if they occurred would tend to cause wear and thereby deteriorate the sealing capability between the faces, especially when abrasive solid particles are present in the flow stream. Although such wear may occur between surfaces 40 and 44, no sealing capability is required there and the acceptable wear is many times greater than is the acceptable wear of faces 48 and 50. The conventional practice of coating such surfaces as 48,50,40 and 44 with materials of greater resistance to heat, corrosion and erosion such as cobalt-nickle alloys or ceramics may be used with the present invention to further extend the service life thereof. Therefore, the tendency for damage is greatly decreased by the present invention and the resistance to damage is increased by the coatings.

Operation of the apparatus may be as follows:

Anytime after assembly of the valve and even after the valve has been in service, the positions of bars 52 may be adjusted so as to establish a desired value of clearance 54 when gate 12 is in the closed position. The adjustable stop means 30 may be withdrawn a precise distance from its normal operating position so as to allow the gate 12 to travel past the normal closed position, the precise distance times the tangent of angle 46 being equal to clearance 54 as desired when gate 12 is at the normal closed position. Thereafter, stem 26 may be actuated by conventional means to move the gate 12 along path 45 so as to touch stop means 30. With caps 62 removed, bolts 56 may be selectively loosened to allow repositioning of bars 52 such that the gate 12 is moved against orifice 14 and face 48 abuts and is parallel to face 50, the difference in diameters of openings 58 being sufficiently greater than the diameters of bolts 56 to allow for the axial and angular movement of bars 52. The bolts 56 may then be tightened sufficiently to prevent further movement of bars 52 against operating forces, spacers 60 being clamped between bars 52 and body 10. Stop means 30 may then be readjusted so as to limit movement of gate 12 at the closed position. Caps 62 may then be sealably attached to body 10 so as to prevent leakage through openings 58. It is now obvious that stem 26 may be actuated by conventional means to reversibly move the gate between the open and closed positions and to selectively position gate 12 at any intermediate position so as to throttle flow of the high temperature fluid. Initial clearance 54 may be chosen as a maximum value that will effect sufficient sealing capability, depending on service requirements and fluid characteristics such as viscosity at service temperature, the size of solid particles that may be in the flow-stream and the differential pressure across the gate. The increase in clearance between face 48 and face 50 for any position will be equal to the distance the gate is positioned from the closed position times the tangent of angle 46. Angle 46 may be established so as to be no greater than is necessary to cause acceptable sealing capability between portions of faces 48 and 50 that may be adjacent one another at any position of gate 12; and no less than is necessary to prevent contact between faces 48 and 50 as might have been caused by fabrication tolerances and distortions due to heat pressure and mechanical forces. The angle 46 established between gate 12 and bar 36 as shown in Figure 4 may be fixed as shown or may be made adjustable by any of several well-known methods of attachement. Other modes of adjustment and operation may be used without departing from the spirit and scope of the present invention.

0162159

- 1 -

CLAIMS

1. A method for controlling the flow of a high temperature stream of fluid comprising: selectively positioning a gate member so as to restrict flow through an orifice; maintaining a face of the gate member in a plane substantially parallel to the plane of a co-operating face of the orifice; and maintaining the distance between said planes within a predetermined range so as to cause desired flow control between said faces.

2. A method according to Claim 1, in which the predetermined distance between said plane is great enough to prevent sliding contact between said faces.

3. A method according to Claim 1 or 2, in which solid particles are present in the flow stream; and the predetermined distance between said planes is no greater than can be bridged by the solid particles, so as to effect a seal between adjacent portions of said surfaces.

4. Means for controlling the flow of a high temperature stream of fluid comprising means for selectively positioning a gate member so as to restrict flow through an orifice; means for maintaining a face of the gate member in a plane substantially parallel to the plane of a co-operating face of the orifice; and means for maintaining the distance between said planes within a predetermined range so as to cause desired flow control between said faces.

5. Control means according to Claim 4, in which the predetermined distance between said planes is great enough to prevent sliding contact between said faces.

6. Control means according to Claim 4 or 5, in which solid particles are present in the flow stream; and the predetermined distance between said planes is no greater than can be bridged by the solid particles, so as to effect a seal between adjacent portions of said surfaces.

7. Means according to Claims 4,5 or 6, wherein said faces of the orifice and gate member are made of materials resistant to deterioration in the presence of a high temperature flow stream.

8. A method for adjusting a flow control gate member for sliding movement with respect to a co-operating orifice, in which the gate member is positioned such that a face of the gate member is in contact with a co-operating face of the orifice and transversely a predetermined distance past an extreme operating position of the gate member; and adjusting gate member guide means so as to allow for precise sliding movement of the gate with respect to the orifice, along a line of travel; the line of travel forming an angle of less than five degrees with respect to said faces.

9. A method according to Claim 8, in which stop means are adjusted so as to prevent transverse movement of the gate member past the extreme operating position.

10. A method according to Claim 8 or Claim 9, in which the said extreme operating position of the gate effects a minimum desired spacing between said faces.

11. Means for adjusting a flow control gate member for sliding movement with respect to a co-operating orifice, comprising means positioning the gate member such that a face of the gate member is in contact with a co-operating face of the orifice and transversely a predetermined distance past an extreme operating position of the gate member; and means for adjusting the gate member guide means so as to allow for precise sliding movement of the gate with respect to the orifice, along a line of travel; the line of travel forming an angle of less than five degrees with respect to said faces.

12. Means according to Claim 11, including adjusting stop means so as to prevent transverse movement of the gate member past the extreme operating position.

13. Means according to Claim 11 or 12, in which said extreme operating position of the gate effects a minimum desired spacing between said faces.

14. Means according to Claim 11, wherein the gate member guide means comprise guide surfaces on the gate member for limiting the movement of said gate member with respect to the orifice except for movement along said line of travel; and guide surfaces adjustably mounted with respect to the orifice face for co-operation with guide surfaces on said gate member; such that said adjustable guide surfaces may be positioned so as to maintain said face of the gate member parallel with said face of the orifice and allow for selective positioning of the gate member with respect to the orifice along said line of travel.

0162159

FIG. 1

FIG. 3

0162159

FIG. 2

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 556 908 (TAPCO INTERNATIONAL)<br><br>* Page 1, lines 15-19, page 2, lines 8-26, figure 4 * | 1-5,7 8,11, 14 | F 16 K 3/02<br>B 65 D 90/58 |
| A | DE-A-2 556 909 (TAPCO INTERNATIONAL)<br><br>* Figures 2,4 * | 1-5,7 8,11, 14 | |
| A | US-A-4 378 817 (HOUSTON)<br><br>* Column 2, lines 37-62, column 4, lines 35-40; figure 4a * | 1,2,4 5,7,11 ,14 | |
| A | US-A-3 022 921 (DAVENPORT et al.)<br>* Figures 3-5 * | 1-5,7 | TECHNICAL FIELDS SEARCHED (Int. Cl.4)<br><br>F 16 K 3/00<br>F 16 K 27/00<br>B 65 D 90/00 |
| A | US-A-2 787 438 (BAUER)<br>* Figures 1,2 * | 1-5 | |
| A | CH-A- 360 945 (L. V. ROLL'SCHE EISENWERKE)<br>* Figures 1,2 * | 1,2,4 5,9,10 | |
| A | US-A-3 559 949 (MULLER)<br><br>* Figures 1,4,7-11 * | 1,9-11 ,13 | |
| | --- -/- | | |

The present search report has been drawn up for all claims

| Place of search<br>BERLIN | Date of completion of the search<br>06-12-1984 | Examiner<br>SCHLABBACH M |
|---|---|---|

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-1 921 062 (ADAMS)<br>* Figures 4,5 *<br><br>----- | 1,11 | |
| | | | **TECHNICAL FIELDS SEARCHED (Int. Cl.4)** |

The present search report has been drawn up for all claims

| Place of search | Date of completion of the search | Examiner |
|---|---|---|
| BERLIN | 06-12-1984 | SCHLABBACH M |